# EUROPÄISCHE PATENTSCHRIFT

(11) **EP 0 977 231 B1**
(45) Veröffentlichungstag und Bekanntmachung des Hinweises auf die Patenterteilung: **10.12.2003**
(21) Anmeldenummer: 99114829.7
(22) Anmeldetag: 29.07.1999
(51) Int. Cl.: H01H 61/02, H01H 37/54

(54) **Elekrisches Schaltgerät**
Electrical switch
Interrupteur Electrique

(30) Priorität: 29.07.1998 DE 19833983
(43) Veröffentlichungstag der Anmeldung: 02.02.2000
(73) Patentinhaber: E.G.O. ELEKTRO-GERÄTEBAU GmbH, D-75038 Oberderdingen (DE)
(72) Erfinder: Reimold, Günther, 75038 Oberderdingen-Flehingen (DE); Platt, Nils, Huntington Beach, CA 92647 (US); Mannuss, Siegfried, 75447 Sternenfels (DE)
(74) Vertreter: Patentanwälte Ruff, Wilhelm, Beier, Dauster & Partner

(56) Entgegenhaltungen:
- EP-A- 0 194 512
- EP-A- 0 285 086
- DE-B- 1 490 743
- DE-U- 29 710 464

## Beschreibung

### ANWENDUNGSGEBIET UND STAND DER TECHNIK

Die Erfindung betrifft ein elektrisches Schaltgerät gemäß dem Oberbegriff des Anspruchs 1.

Derartige Schaltgeräte sind beispielsweise aus der DE 26 25 716 bekannt. Des weiteren sind Heizeinrichtungen für thermomechanische Schaltgeräte bekannt, die aus Trägern aus Glimmer oder Keramik bestehen, welche einen Heizwiderstand o.dgl. tragen. Heizwiderstände bestehen oft aus dünnem Draht, der als Folge des Anlegens einer Spannung Wärme erzeugt. Ein Problem mit solchen Trägern für Heizwiderstände besteht darin, daß die Materialien anfällig sind zu zerbrechen und entsprechend ihrer Materialeigenschaften schwierig herzustellen sind.

Ein derartiges Schaltgerät ist auch aus der EP 194 512 A2 bekannt. Dort ist auf einem keramischen Träger ein Heizwiderstand aufgebracht. Der keramische Träger wiederum ist mittels einer metallischen Federhalterung an dem Schaltgerätsockel festgehalten und elektrisch kontaktiert. Hierbei besteht offenbar das Problem, dass die Keramik in der metallischen Federhalterung teilweise ausbrechen kann, was zum Ausfall des Schaltgerätes führen kann.

### AUFGABE UND LÖSUNG

Es ist Aufgabe der Erfindung, ein Schaltgerät mit einer Heizeinrichtung zu schaffen, die einen Träger aufweist, der gut einsetzbar, handzuhaben und herzustellen ist.

Diese Aufgabe wird durch gelöst durch ein Schaltgerät mit den Merkmalen des Anspruchs 1. Erfindungsgemäß ist der Träger metallisch und weist eine elektrisch isolierende Isolationsschicht zwischen wenigstens einer Oberfläche und dem wenigstens einen Heizwiderstand auf. Sie ist unlösbar auf eine Oberseite des Trägers aufgebracht und bedeckt diese im wesentlichen. Eine Heizeinrichtung mit einem metallischen Träger für wenigstens einen Heizwiderstand zur Wärmebeeinflussung des thermomechanischen Schaltorgans kann leicht gehandhabt werden und ist nicht gefährdet, ohne weiteres zu brechen.

Das thermomechanische Schaltorgan ist bevorzugt ein Thermobimetall, wobei besonders bevorzugt die Schicht mit dem größeren Ausdehnungskoeffizienten zu dem Träger bzw. dem Heizwiderstand hin weist.

Bei einer Ausführung der Erfindung besteht der Träger aus Flachmaterial, wobei er insbesondere eine Platte mit einer Stärke zwischen 0,1 mm und 4 mm ist, beispielsweise ca. 1 mm. Er kann eine rechteckige Form haben.

Eine Isolationsschicht kann beispielsweise durch ein Dickschichtverfahren aufgetragen werden, bevorzugt ist sie glasartig oder aus Glas oder Keramik. Alternativ sind isolierende Folien o. dgl. möglich, zB. aus hochtemperaturfestem Kunststoff. Eine in einem Dickschichtverfahren aufgebrachte Isolationsschicht aus Glas o. dgl. kann es ermöglichen, einen Heizwiderstand flächig und direkt auf sie aufzubringen, beispielsweise einen Dickschichtheizwiderstand. Er kann mit wenigstens einem Kontakt bzw. einem metallischen Kontaktfeld, das ebenfalls in einem Dickschichtverfahren aufgebracht sein kann, verbunden sein. Ein Kontaktfeld kann zumindest teilweise direkt auf die Isolationsschicht aufgebracht sein und in einem Bereich den Heizwiderstand zur elektrischen Kontaktierung überlappen bzw. sich mit diesem überdecken. Ein anderes, vorzugsweise zweites, Kontaktfeld kann direkt auf dem Trägermaterial aufliegen und den Träger kontaktieren. Dazu bedeckt die Isolationsschicht vorzugsweise eine Oberfläche des Trägers nur teilweise, so daß das Kontaktfeld in dem freien Abschnitt direkt auf dem Träger aufliegen kann. Auf diese Weise ist der Träger über das Kontaktfeld mit dem Heizwiderstand bzw. einem Ende davon verbunden. Möglich ist des weiteren ein drittes Kontaktfeld, das beispielsweise eine Art Mittelabgriff des Heizwiderstandes ermöglicht. Es liegt bevorzugt auf der Isolationsschicht auf und ragt seitlich unter dem Heizwiderstand vor.

Die Oberfläche des Trägers kann zumindest teilweise aus einem für Dickschichtverfahren geeigneten Stahl, einem sogenannten Dickschichtstahl, bestehen. Näheres hierzu ist in der EP-A 885 579 beschrieben. Einerseits kann der Träger ganz aus einem Dickschichtstahl bestehen. Andererseits kann der Träger aus mehreren unlösbar miteinander verbundenen Schichten, insbesondere aus wenigstens einer Dickschichtstahlschicht als Außenseite für die Heizeinrichtung und wenigstens einer kupferhaltigen Schicht, bestehen. Bevorzugt ist ein Schichtaufbau des Trägers symmetrisch zu seiner Mittelebene und weist besonders bevorzugt eine Kernschicht aus Kupfer und Außenschichten aus Dickschichtstahl auf. Dies hat den Vorteil, daß ein Bimetalleffekt des Trägers vermieden wird sowie der Kupferkern im wesentlichen eingeschlossen ist. Die Mittelschicht aus Kupfer sollte dicker sein als die Außenschichten, insbesondere zwei- bis zwanzigmal so dick, bevorzugt ca. viermal so dick. Ein solches Material ist z.B. durch Plattieren aus einzelnen Blechen o.dgl. großflächig herstellbar, wobei die einzelnen Trägerplatten anschließend lediglich ausgeschnitten und abgetrennt werden müssen.

Der Träger kann an dem Schaltorgan gehaltert sein, beispielsweise durch Kontaktschweißen. Das Schaltorgan ist bevorzugt metallisch und elektrisch leitfähig, wobei es einen elektrischen Anschluß für die Heizeinrichtung bilden kann. Der Träger und das Schaltorgan können sich im Bereich ihrer Verbindung flächig berühren, wozu beide zumindest teilweise flach und eben sind. Bei einer Ausführung kann das Schaltorgan ab etwa dem mittleren Drittel des Trägers oder des Heizwiderstandes davon beabstandet sein, wobei es vorzugsweise mit geringem und etwa gleichem Abstand dazu verläuft und den Träger um ein gutes Stück in Längsrichtung überragt.

Das Schaltorgan ist bevorzugt langgestreckt und liegt mit einem freien Ende an der Schnappfeder, insbesondere an einem freien Ende der Schnappfeder, an. Das Ende des Schaltorgans kann hakenförmig o.dgl. abgebogen sein, wobei es vorteilhaft in dieser hakenförmigen Abbiegung eine Ausnehmung in Längsrichtung des Schaltorgans aufweist.

Eine Möglichkeit einer Justiereinrichtung zur Veränderung des Abstandes zwischen Schaltorgan und Schnappfeder kann im Bereich des freien Endes des Schaltorgans vorgesehen sein, beispielsweise in der hakenförmigen Abbiegung. Eine Justierung kann durch eine Drehbewegung erfolgen. Hierzu ist vorteilhaft ein Stift vorgesehen mit einer umlaufenden und stetig zunehmenden Durchmessererweiterung, der in der Abbiegung gelagert ist und mit der Durchmessererweiterung an dem freien Ende der Schnappfeder anliegt. Durch Drehen ist eine Änderung des Abstands möglich. Wenn die Drehachse und/oder die Stiftachse senkrecht zu der Bewegungsrichtung des Schaltorgans verlaufen, hat eine bei der Justierung in Achsenrichtung auftretende Kraft keine Verstellung der Schnappfeder zur Folge und eine präzise Justierung ist möglich. Zur Justierung weist der Stift vorzugsweise an einem Abschnitt Werkzeugangriffsflächen auf. Die Durchmessererweiterung läuft bevorzugt in der länglichen Ausnehmung. Wenn die Abbiegung für den Stift die sich stärker ausdehnende Schicht des Schaltorgans bzw. Thermobimetalls radial außen trägt, schließt sich die Abbiegung bei Erwärmung und klemmt den Justierstift fest, so daß eine Drehung desselben vermieden werden kann.

Alternativ kann eine Justiereinrichtung an dem Träger angreifen, insbesondere an der von dem Schaltorgan abgewandten Seite und/oder an der Heizeinrichtung. Durch sie kann die Position des Trägers und/oder der Schnappfeder relativ zu einer Lagerung der Schnappfeder, mit welcher der Träger über das an der Schnappfeder anliegende Schaltorgan verbunden ist, bestimmt werden. In weiterer Ausgestaltung kann die Justiereinrichtung zumindest teiweise elektrisch leitend sein, bevorzugt metallisch, wobei sie vorteilhaft einen elektrischen Anschluß für den Heizwiderstand bildet. Eine Möglichkeit ist eine in dem Schaltgerätsockel gelagerte Metallschraube, die in Bewegungsrichtung des Schaltorgans weist und an einem Kontakt bzw. Kontaktfeld des Heizwiderstandes anliegt. Das Lager der Schraube kann mit einem Anschluß für das Schaltgerät verbunden sein, insbesondere einstückig. Zur verbesserten Isolation kann diese Verbindung zumindest teilweise vollständig innerhalb des Schaltgerätsockels laufen, beispielsweise beim Herstellvorgang darin eingespritzt werden. So ist es möglich, eine Anschlußfahne o. dgl. an einer anderen Stelle als den einen Anschluß für die Heizeinrichtung vorzusehen.

Das Schaltorgan kann federnd an dem Schaltgerätsockel befestigt sein, bevorzugt an einem über die Innenseite des Schaltgerätsockels reichenden Abschnitt eines Anschlusses für das Schaltgerät. Bevorzugt liegt es unter elastischer Spannung an einer Verstelleinrichtung für seine Position an. Mit dem Träger für den Heizwiderstand kann es an einer Kontakteinrichtung für die Heizung anliegen.

Die Schnappfeder ist vorzugsweise über ein elastisches Trageblech, welches mit dem freien Ende der Schnappfeder verbunden ist, an dem Schaltgerätsockel befestigt. Mit elastischer Spannung wird sie dabei in Richtung auf das Schaltorgan zu gedrückt, wozu das Trageblech in etwa U-förmig abgebogen sein kann und sowohl das Schaltorgan trägt als auch beide Vorrichtungen aufeinander zu drückt.

An dem Trageblech kann ein Schleifer angebracht sein, der mit einem Vorsprung an einer Verstelleinrichtung elastisch anliegt und auf diese Weise die Stellung der Schnappfeder relativ zu der Verstelleinrichtung festlegt. Er kann an der von der Schnappfeder abgewandten Seite, vorzugsweise in der Nähe der Befestigung des Trageblechs an dem Schaltgerätsockel, befestigt sein.

Die Verstelleinrichtung weist vorzugsweise eine Steuerachse mit wenigstens einer Nockenwalze auf, wobei der Radius der Nockenwalze zumindest abschnittsweise zunimmt. Durch Drehen der Steuerachse samt Nockenwalze kann die Stellung der Schnappfeder verändert werden, beispielsweise der Abstand des freien Endes zu dem Schaltorgan verändert werden.

Möglich ist auf diese Weise eine elektrische Kontaktierung der Heizeinrichtung einerseits über die Justiereinrichtung und andererseits über den Träger und das Schaltorgan, welches in der Regel ohnehin unter Spannung steht.

Die Schnappfeder ist vorzugsweise als bistabile Dreipunktblattfeder ausgeführt, insbesondere einstückig. Sie weist bevorzugt zwei haarnadelförmige Schenkel auf, die an wenigstens einem Ende, vorzugsweise beiden, miteinander verbunden sind, wobei ein verbundenes Ende an einer Verlängerung den Schaltkontaktkopf trägt. Zwischen den Schenkeln kann eine von einem Ende, insbesondere dem mit dem Schaltkontaktkopf, abgehende Federzunge verlaufen und an einem Widerlager abgestützt sein. Die Federzunge steht üblicherweise gegenüber den Schenkeln unter Vorspannung und speichert einen Teil der Schaltenergie für den Umschaltvorgang.

Der Schleifer kann als Thermobimetall ausgebildet sein und vorzugsweise das Widerlager für die Federzunge der Schnappfeder bilden. Es ist möglich, ihn als Kompensationsbimetall mit derselben Biegungsrichtung wie das Schaltorgan auszuführen. So ist ein Ausgleich einer durch äußere Umstände hervorgerufenen Änderung der Umgebungstemperatur und somit einer Formänderung des Schaltbimetalls möglich, um in einem weiten Umgebungstemperaturbereich ein exaktes Schaltverhalten zu gewährleisten.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: eine Draufsicht auf einen metallischen Träger mit Dickschichtheizwiderstand und Kontaktfeldern,
- Fig. 2: eine Seitenansicht eines Schnappschalters mit einem Träger aus Fig. 8,
- Fig. 3: eine Schrägansicht einer Variante des Schnappschalters aus Fig. 9 mit Justiereinrichtung am Ende des Thermobimetalls und
- Fig. 4: eine Draufsicht auf einen Schaltgerätsockel mit eingesetztem Schiebeschalter samt Schaumstoffblock.

### DETAILLIERTE BESCHREIBUNG DER AUSFÜHRUNGSBEISPIELE

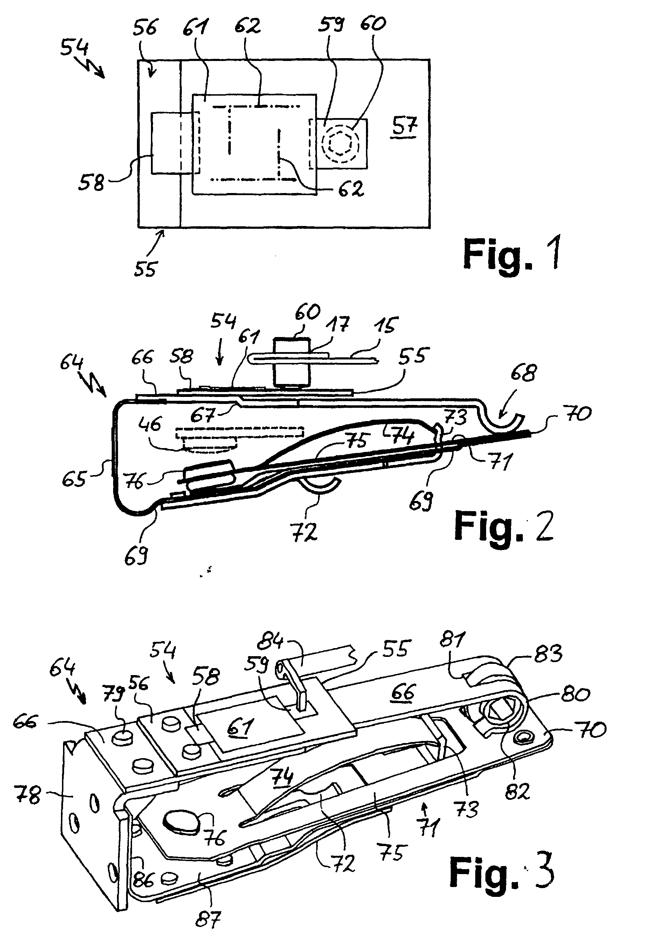

In der Fig. 1 ist eine Heizeinrichtung 54 gemäß der Erfindung in Draufsicht dargestellt. Sie besteht aus einem metallischen Träger in Form einer rechteckigen Trägerplatte 55. Wie zuvor beschrieben, kann die Platte ganz aus einem für Dickschichtverfahren geeigneten Stahl bestehen oder einen Sandwichaufbau mit einer Kernschicht aus Kupfer aufweisen. Wichtig ist, daß sie zumindest eine, vorteilhaft zwei, Stahloberflächen 56 aufweist. Auf diese wird eine Isolierschicht 57 aufgebracht, wobei ein Streifen der Stahloberfläche 56 (am linken Ende der Platte) nicht bedeckt ist. Auf die beispielsweise aus Glas in einem Dickschichtverfahren hergestellte Isolierschicht 57 wird ein Anschlusskontaktfeld 58 aufgetragen, das großflächig den freien Streifen der Stahloberfläche 56 überlappt und etwa zur Hälfte auf der Isolierschicht liegt. In einem gewissen Abstand dazu befindet sich auch in dem rechten Abschnitt der Isolierschicht 57 ein Abgriffkontaktfeld 59. Beide Kontaktfelder 58 und 59 sind rechteckig, jedoch in unterschiedlicher Größe ausgeführt. Sie bestehen vorteilhaft größtenteils aus Metall und können in einem Dickschichtverfahren auf die Isolierschicht 57 bzw. die Stahloberfläche 56 aufgebracht und eingebrannt sein.

In einem dritten Arbeitsvorgang wird auf die Isolierschicht 57 eine den Randbereich der Kontaktfelder 58 und 59 überdeckende Schicht aus Widerstandsmaterial als flächiger Heizwiderstand 61 aufgebracht und eingebrannt. Die Überlappung zu den Kontaktfeldern sollte so groß sein, daß eine ausreichende und sichere Kontaktierung gewährleistet ist.

Zur präzisen Abstimmung des Heizwiderstandes 61 auf einen gewünschten bzw. vorgegebenen Widerstandswert können beispielsweise mit einem Laser strichpunktiert dargestellte Trennlinien 62 in den Heizwiderstand 61 geschnitten werden. Dies erfolgt bevorzugt in einer automatischen Abgleichanlage, in der während des Laserschneidens durch Messung an den beiden Kontaktfeldern 58 und 59 der Widerstandswert des Heizwiderstandes 61 permanent gemessen wird.

In einem letzten Arbeitsschritt wird zumindest auf die Oberfläche des Heizwiderstandes 61 eine nicht dargestellte Passivierungsschicht aufgebracht. Diese schützt das Widerstandsmaterial vor äußeren Einflüssen und verhindert beispielsweise das Zusetzen der Trennlinien 62 mit Verunreinigungen. Die Passivierungsschicht, die bevorzugt zumindest teilweise aus Glas besteht, kann bis auf das Abgriffkontaktfeld 59 theoretisch die gesamte Seite der Heizeinrichtung 54 bedecken. Die Unterseite der Platte 55 sollte zumindest im Bereich des freien Streifens frei bleiben.

Im Betrieb erfolgt die Kontaktierung des Heizwiderstandes 61 einerseits über die Trägerplatte 55 und das Anschlußkontaktfeld 58. Andererseits liegt eine weitere Kontaktierung an dem Abgriffkontaktfeld 59 an, beispielsweise eine punktiert dargestellte, in die Zeichenebene hinein verlaufende Innensechskantschraube 60. Einzelheiten hierzu sind aus Fig. 2 bzw. Fig. 3 ersichtlich.

Die Heizeinrichtungen 54 können entweder großflächig aus einem entsprechenden Flachmaterial durch das Aufbringen der entsprechenden Schichten in vielfacher Anzahl auf große Flächenbereiche und abschließendes Vereinzeln in einzelne Heizer hergestellt werden. Alternativ werden zuerst die Träger 55 auf entsprechende Größe gebracht und darauf der Schichtaufbau aufgebracht. Der Vorteil der ersten Methode liegt in der verbesserten Handhabung großer Metallplatten sowie rationeller Bearbeitungsmethoden.

Die Fig. 2 zeigt in Seitenansicht einen Schnappschalter 64 als Geräteschalter. An einem U-förmigen Trageblech 65 ist an einem oberen kurzen Schenkel als Schaltorgan ein Thermobimetallstreifen 66 befestigt, beispielsweise durch Kontaktschweißen oder Vernieten. Der Bimetallstreifen 66 weist in einem gewissen Abstand von dieser Verbindung einen Doppelknick 67 auf, um daran anschließend in gleicher Richtung in der Fig. 2 nach rechts weiterzulaufen. Der Streifen endet in einem nach unten und rechts abgebogenen Endhaken 68.

Zwischen der Verbindung des Bimetallstreifens 66 mit dem Trageblech 65 und dem Doppelknick 67 ist an seiner oberen Seite eine Heizeinrichtung 54, bevorzugt entsprechend Fig. 1, befestigt, vorteilhaft durch Kontaktschweißen. Deren Heizwiderstand 61 liegt dabei in etwa mittig über dem Doppelknick 67. Damit kann ein Teil der Heizung die Heizleistung durch Kontaktwärme von der Trägerplatte 55 direkt an das Thermobimetall in dessen Wurzelbereich übertragen. Der andere Teil der Heizleistung wird durch Strahlungswärme bzw. Konvektion von der Heizung bzw. dem Träger 55 über den Luftspalt zu dem Thermobimetall 66 im Bereich nahe des Doppelknicks 67 übertragen. Eine Beheizung vor allem des Wurzelbereichs des Thermobimetallstreifens 66 nahe seiner Befestigung an dem Trageblech 65 bewirkt eine kontrollierbare und gleichmäßige Erwärmung des Bimetalls. Daraus wiederum resultiert eine besser kontrollierbare Verformung des Streifens 66 bzw. Positionsänderung des Endes 68.

An die Heizeinrichtung 54 bzw. an dem nicht dargestellten Abgriffkontaktfeld 59 liegt eine Justierschraube 60 an, die als Innensechskantschraube ausgeführt sein kann. Sie ist in dem Aufnahmesteg 15 bzw. in den Gewindebohrungen 17 gelagert. Die Justierschraube 60 dient einerseites als zweite Kontaktierung an den Heizwiderstand 61, wie bereits oben erläutert, und führt über den Aufnahmesteg 15 und einen nicht dargestellten Verbindungssteg 13 zu einem Steckanschluß.

Als weitere Aufgabe dient die Justierschraube 60 zur genauen Justierung der Stellung des Thermobimetallstreifens 66 in einem ausgewählten Zustand durch Kraftübertragung mittels des Trägers 55. Eine Justiereinrichtung dieser Art weist neben der Funktion des Kontaktierens der Heizung ohne zusätzliche Bauteile den großen Vorteil auf, daß die Lagerung des Justierelements, nämlich der Aufnahmesteg 15, fest und in seiner Position unveränderlich an dem Schaltgerätsockel 41 angebracht ist. Somit kann durch Anlegen eines Werkzeugs an die Justierschraube 60 und daraus resultierende Kräfte an sich ohne eine Drehbewegung der Schraube keine Positionsänderung des Bimetallstreifes 66, die zu Fehlern führen könnte, auftreten. Die Trägerplatte 55 weist vorteilhaft eine ausreichende Materialstärke auf, daß sie nicht von der Federkraft des Trageblechs 65 einerseits und der Anlage an der Schraube 60 andererseits gegen den Bimetallstreifen 66 gedrückt wird.

Der andere, längere Schenkel 69 des Trageblechs 65 ist langgezogen ausgeführt und in der Fig. 2 rechts mit dem Ende 70 der Schnappfeder 71 verbunden, beispielsweise durch Nieten oder Schweißen. An der Unterseite des unteren Schenkels 69 ist ein weiteres Element angebracht, das einen Schleifer 72 zur Anlage an einer Verstelleinrichtung für den Schnappschalter 64 aufweist. Dieses Element kann als Kompensationsbimetall ausgeführt sein, mit der gleichen Schichtanordnung wie der Streifen 66. Dadurch ist ein Ausgleich von äußeren Temperaturänderungen möglich. Des weiteren ist ein Widerlager 73 daran vorgesehen, an dem sich ein Federbügel 74 der Schnappfeder 71 abstützt. Zu beiden Seiten des Federbügels 74 verlaufen Federschenkel 75, die an dem anderen Ende der Schnappfeder 71 mit dem Federbügel verbunden sind und einen Schaltkontaktkopf 76 tragen. Die Schnappfeder 71 ist somit als Dreipunktblattfederelement ausgebildet.

Zwischen dem Schaltkontaktkopf 76 und dem Wurzelbereich des Bimetallstreifens 66 ist im Schaltgerätsockel 41 an einem Anschlußabschnitt der Gegenkontaktkopf 46 angebracht. Der Anschlußabschnitt ist mit einer nicht dargestellten Steckanschlußfahne 12 in dem Schaltgerätsockel 41 verbunden. Diese Teile sind gestrichelt dargestellt, da sie nicht zu der Baueinheit des Schalters 64 gehören.

Das aus zwei Schichten bestehende Thermobimetall 66 weist die Schicht mit dem geringeren Ausdehnungskoeffizienten auf der Seite zu der Schnappfeder 71 auf. Bei einer Erwärmung durch die Heizeinrichtung 54 krümmt sich das Thermobimetall 66 somit in Richtung auf die Schnappfeder 71 zu, in Fig. 2 nach unten, und betätigt diese durch Druck auf ihr freies Ende 70. Bis auf die Justiereinrichtung mit der Schraube 60 und den Gegenkontaktkopf 46 bildet der Schnappschalter 64 eine Baueinheit. Mit dem die beiden Schenkel verbindenden Abschnitt des Trageblechs 65 wird der Schnappschalter 64 an einem Schaltgerätsockel 41 befestigt.

Fig. 3 zeigt in Schrägansicht eine geringfügige Abwandlung eines als Geräteschalter fungierenden Schnappschalters 64 gemäß der Erfindung. An dem abgebogenen Schenkel einer L-förmigen Grundplatte 78 ist ähnlich wie in Fig. 2 ein Thermobimetatlstreifen 66 durch Nietköpfe 79 angebracht. Der Thermobimetallstreifen 66 ist länglich ausgebildet und weist an seinem freien Ende einen nach innen gebogenen Aufnahmeabschnitt 80 auf. Dieser ist mit einem mittig angebrachten Aufnahmeschlitz 81 versehen, der bis zum Ende des Streifens 66 verläuft. In diesem Schlitz ist als Justierelement ein Justierstift 82 gelagert, der sich über die Breite des Streifens 66 erstreckt und in seinem Mittelbereich eine flanschförmige Durchmessererweiterung 83 trägt Diese Durchmessererweiterung beträgt teilweise wesentlich mehr als die Stärke des Streifens 66 und bildet an ihrem Außenumfang eine Kurve mit bevorzugt stetig zunehmendem Radius. Mit dem Außenumfang der Durchmessererweiterung 83 liegt der Justierstift 82 und somit der Bimetallstreifen 66 an dem freien Ende 70 der Schnappfeder 71 an. Je nach Stellung des Justierstifts 82 ist durch den sich ändernden Radius der Abstand zwischen Streifen 66 und dem Schnappfederende 70 veränderbar. Dies ist eine vorteilhafte Ausbildung einer Justiervorrichtung für den Schnappschalter 64 gemäß einem Aspekt der vorliegenden Erfindung.

Ähnlich wie in Fig. 2 trägt der Thermobimetallstreifen 66 im Bereich seiner Befestigung an der Grundplatte 78 eine Heizeinrichtung 54 in Form eines metallischen Trägers samt Dickschichtwiderstandsheizung 61 gemäß Fig. 1. Eine Kontaktfeder 84 liegt an dem Abgriffkontaktfeld 59 und dient neben der Kontaktierung des Heizwiderstandes 61 über das Anschlußkontaktfeld 58 und den Träger 55 an die Grundplatte 78 als zweite Kontaktierung.

Anders als in Fig. 2 ist an der L-förmigen Grundplatte 78 ein abgewinkeltes Ende 86 eines Trageblechs 87 durch Vernietung befestigt. Ansonsten ist das Trageblech 87 gemäß dem unteren Schenkel 69 in Fig. 2 ausgebildet, ebenso der Schnappschalter 64. Deswegen wird auf den Aufbau der Schnappfeder 71 samt Schleifer 72 und Schaltkontaktkopf 76 an dieser Stelle nicht weiter eingegangen.

Der Vorteil dieser Justiervorrichtung besteht unter anderem darin, daß die Angriffsrichtung des Werkzeuges zur Verstellung des Justierstiftes 82 senkrecht zu der Wirkrichtung der Justierung liegt. Dadurch können Verfälschungen bei der Justierung infolge der Krafteinwirkung des Werkzeuges auf den Justierstift 82 vermieden werden. Der Vorteil der dargestellten Ausbildung des Aufnahmeabschnittes 80 mit einer Krümmung nach innen liegt darin, daß sich bei einer Erwärmung des Thermobimetallstreifens 66 der Abschnitt verengt und damit den Justierstift 82 besonders fest und lagesicher umfaßt. Zur Vereinfachung des Einsetzens des Stiftes 82 in den Aufnahmeabschnitt 80 können die gegabelten Enden des Streifens wie dargestellt etwas aufgebogen sein.

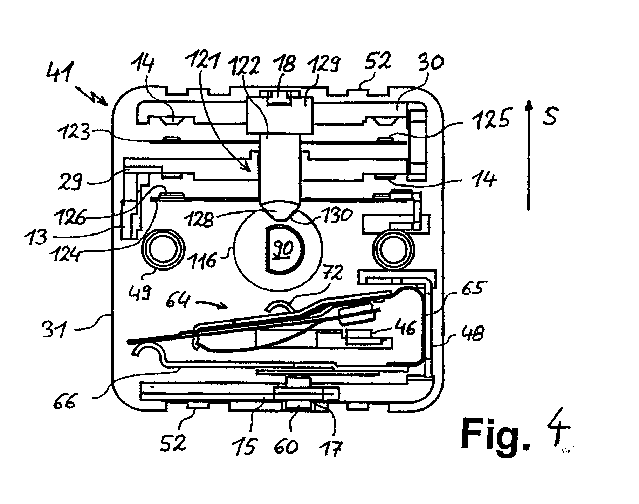

Die Fig. 4 zeigt eine Draufsicht auf einen Schaltgerätsockel 41. In die Längsführung 42 ist der Schalterteil 121 eingesetzt. Der Schaumstoffblock 129 ist an der Befestigungslasche 18 durch Umbiegen eines Endabschnitts derselben befestigt. Der Vorteil einer zusätzlichen Verklebung des Schaumstoffblocks 121 mit dem Schalterteil 129 liegt unter anderem darin, daß auf diese Weise der Schalterteil über den Schaumstoffblock fixiert gelagert ist. Ein seitliches Verrutschen kann sowohl durch die Befestigung mittels des Schaumstoffblocks 129 als auch durch eine nicht dargestellte, in die Längsführung 42 eingreifende Führungsnase vermieden werden.

Die Rastnase 128 des Formkörpers 121 liegt an einer Nockenwalze 116 auf der Steuerachse 90 an, und zwar in einer Schaltausnehmung 130. Die radiale Tiefe der Schaltausnehmung 130 entspricht dem dargestellten Abstand der Kontaktköpfe 125 und 126 des Schalterteils 121 von den Kontaktköpfen 14 des Schaltgerätsockels 41 bzw. liegt etwas darüber. Die Schaltausnehmung 130 kann eine bestimmte Stellung der Steuerachse 90, beispielsweise die sogenannte Nullstellung, definieren. Durch Drehen der Steuerachse 90 wird, sobald die Rastnase 128 aus der Schaltausnehmung 130 bewegt wird und an dem Außenradius anliegt, der Schalterteil 121 in Schieberichtung S gegen den elastischen Widerstand der Schaumstoffederung gedrückt. Dadurch werden die Kontaktköpfe 125 bzw. 126 an die Kontaktköpfe 14 angelegt und verbinden diese jeweils durch die Schalterarme 123 und 124. Somit können Schaltvorgänge durch Verlassen bzw. Erreichen der in Fig. 4 dargestellten Stellung der Nockenwalze 116 ausgelöst werden. Dies kann beispielsweise ein elektrisches Signal zur Betätigung einer Funktionsanzeige sein, ebenso möglich ist die Aktivierung eines Topferkennungssystems o.dgl.

Ebenso ist in Fig. 4 ein eingebauter Schnappschalter 64 gemäß Fig. 2 dargestellt, auf den an dieser Stelle nicht nochmals eingegangen wird. Der Schleifer 72 liegt an einer der Übersichtlichkeit halber weggelassenen Nockenwalze 116 über der dargestellten für den Schalterteil 121 an. Der Schnappschalter 64 kann durch Kontaktschweißen oder Vernieten des Trageblechs 65 mit der Halteplatte 48 an dem Schaltgerätsockel befestigt werden. Nach dem Einbau des Schnappschalters wird die Justierschraube 60 in den Aufnahmesteg 15 eingedreht.

## Patentansprüche

1. Elektrisches Schaltgerät mit einem Schaltgerätsockel (41), Anschlüssen (12, 22, 45) und einem thermomechanischen Schaltorgan (66), das einen Schnappschalter (64) mit wenigstens einer Schnappfeder (71) aufweist, die wenigstens einen Schaltkontaktkopf (76) trägt, wobei der Schnappschalter durch das thermomechanische Schaltorgan (66) auslösbar ist, zu dessen thermischer Beeinflussung eine Heizeinrichtung (54) mit einem Träger (55) für wenigstens einen Heizwiderstand (61) vorgesehen ist, **dadurch gekennzeichnet, daß** der Träger (55) metallisch ist und eine elektrisch isolierende Isolationsschicht (57) zwischen einer Oberfläche und dem wenigstens einen Heizwiderstand (61) aufweist, die auf einer Seite des Trägers unlösbar aufgebracht ist und diese Seite im wesentlichen bedeckt.

2. Elektrisches Schaltgerät nach Anspruch 1, **dadurch gekennzeichnet, daß** der Träger (55) aus Flachmaterial besteht, insbesondere eine flache und längliche Platte mit einer Dicke von vorzugsweise ca. 1 mm ist.

3. Elektrisches Schaltgerät nach Anspruch 1, **dadurch gekennzeichnet, daß** die Isolationsschicht (57) in einem Dickschichtverfahren aufgebracht ist, insbesondere glasartig oder aus Glas oder aus Keramik ist.

4. Elektrisches Schaltgerät nach Anspruch 1 oder 3, **dadurch gekennzeichnet, daß** der Heizwiderstand (61) flächig und direkt auf die Isolationsschicht (57) aufgebracht ist, vorzugsweise als Dickschichtwiderstand, wobei er mit wenigstens einem Kontakt verbunden ist, insbesondere einem durch Dickschichtverfahren aufgebrachten metallischen Kontaktfeld (58, 59), welches vorzugsweise zumindest teilweise direkt auf die Isolationsschicht aufgebracht ist und sich mit einem Bereich des Heizwiderstands zur Kontaktierung flächig überdeckt.

5. Elektrisches Schaltgerät nach Anspruch 4, **dadurch gekennzeichnet, daß** ein Kontaktfeld (58) direkt auf dem Trägermaterial aufliegt und den Träger kontaktiert, wobei die Isolationsschicht (57) vorzugsweise eine Seite des Trägers (55) nur teilweise bedeckt und das Kontaktfeld in diesem freien Teil (56) auf dem Träger aufliegt.

6. Elektrisches Schaltgerät nach einem der vorhergehenden Ansprüche, **dadurch gekennzeichnet, daß** sich der Träger (55) und das Schaltorgan (66) im Bereich der Verbindung flächig berühren, vorzugsweise beide zumindest teilweise flach und eben sind, wobei insbesondere das Schaltorgan ab etwa dem mittleren Drittel des Trägers oder des Heizwiderstandes (61) von diesem beabstandet ist, vorzugsweise mit geringem und etwa konstantem Abstand dazu verläuft und den Träger überragt.

7. Elektrisches Schaltgerät nach einem der vorhergehenden Ansprüche, **dadurch gekennzeichnet, daß** eine Justiereinrichtung (60) an dem Träger (55) angreift, insbesondere an die von dem Schaltorgan (66) abgewandte Seite, und die Position des Trägers und/oder der Schnappfeder (71) relativ zu einer Lagerung der Schnappfeder, mit der der Träger über das an der Schnappfeder anliegende Schaltorgan verbunden ist, bestimmt.

8. Elektrisches Schaltgerät nach Anspruch 7, **dadurch gekennzeichnet, daß** die Justiereinrichtung zumindest teilweise elektrisch leitend ist und einen elektrischen Anschluß für den Heizwiderstand (61) bildet.

9. Elektrisches Schaltgerät nach Anspruch 7 oder 8, **dadurch gekennzeichnet, daß** die Justiereinrichtung (60) mit einem Kontakt (59) des Heizwiderstandes (61) elektrisch leitend verbunden ist, insbesondere mit einer in Bewegungsrichtung des Schaltorgans (66) weisend in dem Schaltgerätsockel (41) gelagerten Metallschraube daran anliegt, wobei das Lager (15, 17) vorzugsweise mit einem Anschluß für das Schaltgerät verbunden ist, insbesondere einstückig verbunden ist, wobei diese Verbindung zumindest teilweise innerhalb des Schaltgerätsockels verläuft.

## Claims

1. Electric switch with a switch base (41), terminals (12, 22, 45) and a thermomechanical switching member (66), which has a snap-action switch (64) with at least one snap-action spring (71), which carries at least one switching contact stud (76), the snap-action switch being releasable by the thermomechanical switching member (66), for whose thermal influencing is provided a heating device (54) with a support (55) for at least one heating resistor (61), **characterized in that** the support (55) is metallic and has an electrically insulating layer (57) between a surface and the at least one heating resistor (61), which is non-detachably applied to one side of the support and substantially covers said side.

2. Electric switch according to claim 1, **characterized in that** the support (55) is made from flat material, particularly a flat, elongated plate with a thickness of preferably approximately 1 mm.

3. Electric switch according to claim 1, **characterized in that** the insulating layer (57) is applied in a thick film process and in particular is vitreous or of glass or ceramic.

4. Electric switch according to claim 1 or 3, **characterized in that** the heating resistor (61) is applied in areal, direct manner to the insulating layer (57), preferably as a thick film resistor and is connected to at least one contact, particularly a metallic contact bank (58, 59) applied by a thick film process and which is preferably at least partly directly applied to the insulating layer and is covered in planar manner by an area of the heating resistor for contacting purposes.

5. Electric switch according to claim 4, **characterized in that** a contact bank (58) rests directly on the support material and contacts the support, the insulating layer (57) preferably only partly covering one side of the support (55) and in said free part (56) the contact bank rests on the support.

6. Electric switch according to one of the preceding claims, **characterized in that** the support (55) and switching member (66) are in areal contact in the vicinity of the connection and preferably both are at least partly flat and planar, whereby as from roughly the central third of the support or heating resistor (61), the switching member is spaced from the latter, preferably having a small and roughly constant spacing with respect thereto and projects over the support.

7. Electric switch according to one of the preceding claims, **characterized in that** an adjusting device (60) engages on the support (55), particularly on the side remote from the switching member (66), and determines the position of the support and/or the snap-action spring (71) relative to a bearing of the latter with which the support is connected by means of the switching member engaging on the snap-action spring.

8. Electric switch according to claim 7, **characterized in that** the adjusting device is at least partly electrically conductive and forms an electric terminal for the heating resistor (61).

9. Electric switch according to claim 7 or 8, **characterized in that** the adjusting device (60) is electrically conductively connected to a contact (59) of the heating resistor (61), particularly engaging thereon with a metal screw mounted in the switch base (41) and directed in the movement direction of the switching member (66), the bearing (15, 17) being preferably connected to a terminal for the switch and is in particular connected in one piece thereto, said connection being at least partly within the switch base.

## Revendications

1. Commutateur électrique avec un socle de commutateur (41), des moyens de branchement (12, 22, 45) et un organe de commutation thermomécanique (66) présentant un commutateur à enclenchement (64) avec au moins un ressort à déclic (71), qui porte au moins une tête de contact de commutation de commande (76), le commutateur à enclenchement pouvant être déclenché par l'organe de commutation thermomécanique (66), un moyen de chauffage (54) avec un support (55) pour au moins une résistance de chauffage (61) étant prévu pour l'influencer thermiquement, **caractérisé en ce que** le support (55) est métallique et qu'il présente une couche d'isolation (57) électriquement isolante entre une surface et la ou les résistances de chauffage (61), la ou lesquelles sont appliquées sur une face du support de manière indétachable et qui recouvrent en substance cette face.

2. Commutateur électrique d'après la revendication 1, **caractérisé en ce que** le support (55) est constitué de matériau plan, en étant notamment une plaque plate et allongée présentant de préférence une épaisseur d'à peu près 1 mm.

3. Commutateur électrique d'après la revendication 1, **caractérisé en ce que** la couche isolante (57) est appliquée par une technique des couches épaisses et qu'elle est notamment vitreuse ou en verre ou en céramique.

4. Commutateur électrique d'après la revendication 1 ou 3, **caractérisé en ce que** la résistance de chauffage (61) est appliquée de manière plate et directe sur la couche isolante (57), de préférence en tant que résistance à couche épaisse, en étant branchée au moins sur un contact, notamment sur un banc de contacts (58, 59) métallique, appliquée par une technique des couches épaisses, lequel est appliqué de préférence au moins en partie directement sur la couche isolante et qui se superpose de manière plate à un domaine de la résistance de chauffage pour l'établissement d'un contact.

5. Commutateur électrique d'après la revendication 4, **caractérisé en ce qu'**un banc de contacts (58) repose directement sur le matériau de support et qu'il établit un contact avec celui-ci, la couche isolante (57) couvrant de préférence seulement une partie de la face du support (55) et le banc de contacts reposant sur le support dans ce domaine libre (56).

6. Commutateur électrique d'après une des revendications précédentes, **caractérisé en ce que** le support (55) et l'organe de commutation (66) sont contigus de manière plane dans le domaine du raccordement, qu'ils sont de préférence tous les deux au moins en partie plats et plans, l'organe de commutation étant notamment écarté du support ou de la résistance de chauffage (61) à peu près à partir du tiers central de celui-ci, s'étendant de préférence avec un écart léger et à peu près constant et en saillant au-delà du support.

7. Commutateur électrique d'après une des revendications précédentes, **caractérisé en ce qu'**un moyen d'ajustage (60) s'engage sur le support (55), notamment sur le côté opposé à l'organe de commutation (66), et qu'il détermine la position du support et/ou du ressort à déclic (71) par rapport à un logement du ressort à déclic, avec lequel le support est raccordé au moyen de l'organe de commutation contigu au ressort à déclic.

8. Commutateur électrique d'après la revendication 7, **caractérisé en ce que** le moyen d'ajustage est au moins en partie un conducteur électrique et qu'il forme un branchement électrique pour la résistance de chauffage (61).

9. Commutateur électrique d'après la revendication 7 ou 8, **caractérisé en ce que** le moyen d'ajustage (60) est raccordé de manière conductible à l'électricité avec un contact (59) de la résistance de chauffage (61), qu'il est notamment contigu à celui-ci par une vis métallique logée dans le socle de commutateur (41) en étant orientée en direction de mouvement de l'organe de commutation (66), le logement (15, 17) étant de préférence raccordé à un moyen de branchement du commutateur, notamment d'une seule pièce, ce raccord s'étendant au moins en partie à l'intérieur du socle de commutateur.
